# EUROPEAN PATENT APPLICATION

(11) **EP 1 593 941 A1**
(43) Date of publication of application: **09.11.2005**
(21) Application number: 04708044.5
(22) Date of filing: 04.02.2004
(51) Int. Cl.: G01F 23/22, B41J 2/175

(54) **EXPENDABLE SUPPLIES CONTAINER CAPABLE OF MEASURING RESIDUAL AMOUNT OF EXPENDABLE SUPPLIES**

(30) Priority: 07.02.2003 JP 2003030600; 07.02.2003 JP 2003030585
(71) Applicant: SEIKO EPSON CORPORATION, Shinjuku-ku, Tokyo 163-0811 (JP)
(72) Inventor: NISHIHARA, Yuichi;, a-shi, Nagano; 3928502 (JP)
(74) Representative: Sturt, Clifford Mark
(86) International application number: PCT/JP2004/001147
(87) International publication number: WO 2004/070325

(57) **Abstract**

An expendable container of the invention has a function of measuring a residual quantity of an expendable kept therein. The expendable container has: an expendable tank that keeps the expendable therein and has a piezoelectric element attached thereto; a detection signal generation circuit that charges and discharges the piezoelectric element and generates a detection signal including information, which represents a cycle of remaining vibration of the piezoelectric element after the discharge; and a control module that controls the charge and the discharge of the piezoelectric element.

The cycle is used to determine whether the residual quantity of the expendable kept in the expendable tank is greater than a preset level.

The control module varies a discharge characteristic of the piezoelectric element.

## Description

### Technical Field

The present invention relates to a technique of measuring a residual quantity of an expendable kept in an expendable container.

### Background Art

Inkjet printers have widely been used as the output device of the computer. Ink as an expendable for the inkjet printer is generally kept in an ink cartridge. One proposed method of measuring the residual quantity of ink kept in the ink cartridge utilizes a piezoelectric element to attain direct measurement, as disclosed in Japanese Patent Laid-Open Gazette No. 2001-147146.

This proposed method first applies a voltage wave to the piezoelectric element attached to the ink cartridge to vibrate a vibrating element of the piezoelectric element. The method then detects a variation in cycle of counter electromotive force, which is caused by remaining vibration in the vibrating element of the piezoelectric element, to measure the residual quantity of the expendable.

This prior art method, however, has a drawback that unintentional vibration noise lower an S/N ratio to interfere with accurate measurement. This problem is not restricted to the ink cartridges but is commonly found in any expendable containers having a function of utilizing a piezoelectric element to measure the residual quantity of an expendable kept therein.

### Disclosure of the Invention

The object of the invention is thus to eliminate the drawbacks of the prior art technique and to provide a technique of enhancing reliability of measurement in an expendable container that utilizes a piezoelectric element to measure a residual quantity of expendable kept therein.

The first application of the invention is an expendable container capable of measuring a residual quantity of stored expendable. The expendable container comprises an expendable tank configured to store the expendable and has a piezoelectric element attached thereto; a detection signal generation circuit configured to charge and discharge the piezoelectric element, and generate a detection signal including cycle information, the cycle information representing a cycle of an output voltage wave of the piezoelectric element after the discharge; and a control module configured to control the charge and the discharge of the piezoelectric element. The cycle is available for determining whether the residual quantity of the expendable is greater than a preset level, and the control module is capable of vary a discharge characteristic of the piezoelectric element.

The first expendable container of the invention is capable of varying the discharge characteristic of the piezoelectric element and changes the characteristic of the remaining vibration of the piezoelectric element after the discharge to be suitable for measurement of the residual quantity of the expendable. This arrangement desirably enhances the reliability of the measurement. Here the piezoelectric element has two characteristics, inverse piezoelectric effect of deformation by charge or discharge and piezoelectric effect of generation of voltage due to deformation.

In these configurations of the expendable container, the control module may be capable of varying a discharge time constant of the piezoelectric element, or the control module may be capable of varying a discharge time of the piezoelectric element. Where, the discharge time is an amount of time during the switch connected between the piezoelectric element and the ground is closed and in conducting state.

In these configurations of the expendable container, the detection signal generation circuit may comprise: a voltage generation circuit configured to generate a predetermined potential difference between a first terminal with a higher potential and a second terminal with a lower potential; the piezoelectric element having one end connected to the second terminal; a charge control switch connected between the first terminal and the other end of the piezoelectric element, and configured to control on and off charging from the first terminal to the piezoelectric element according to a control output from the control module; a discharge control switch connected between the other end of the piezoelectric element and the second terminal, and configured to control on and off discharging from the piezoelectric element to the second terminal according to the control output from the control module; and a resistive circuit connected between the other end of the piezoelectric element and the second terminal, and having a variable resistance. The control module is configured to control the on-off of the charge control switch, the on-off of the discharge control switch, and the resistance of the resistive circuit.

The method invention is a method of measuring a residual quantity of expendable stored in an expendable container, the method comprising the steps of: (a) providing an expendable tank configured to store the expendable and has a piezoelectric element attached thereto, and a circuit configured to charge and discharge the piezoelectric element; (b) setting a discharge characteristic of the piezoelectric element in a variable manner; and (c) carrying out measurement. The step (c) comprising: (c-1) charging the piezoelectric element; (c-2) discharging the piezoelectric element; (c-3) generating a detection signal including information representing a cycle of remaining vibration of the piezoelectric element after the discharge; and (c-4) determining whether the residual quantity of the expendable stored in the expendable tank is greater than a preset level, in response to the detection signal.

In this configuration of the method, the step (c) further may comprise the step of determining whether the stored residual quantity of the expendable is measurable in response to the detection signal, and returning a process to the step (b) in the case of determination of immeasurable; and the step (b) may comprise the step of setting a different value from a current setting on which the measurement is immeasurable to the discharge characteristic and proceeding the process to the step (c), in the case of determination of immeasurable.

The adequate value for measurement of the residual quantity of the expendable is automatically set to the discharge characteristic, and the measurement is performed with this new setting. This arrangement desirably enhances the reliability of the measurement.

In this configuration of the method, the method further may comprise the steps of: (d) providing a non-volatile memory; and (e) recording setting information representing a current setting of the discharge characteristic at a time of the measurement, into the non-volatile memory. The step (b) may set the discharge characteristic according to the setting information read from the non-volatile memory.

The information representing the setting of the discharge characteristic by the latest measurement is recorded in the memory, and the measurement is performed with the recorded setting. This arrangement thus enhances the potential for measurement without any further change in setting of the discharge characteristic.

The first application of the manufacturing method is a method of manufacturing an expendable container capable of measuring a residual quantity of stored expendable. The method comprises the steps of: (a) measuring a characteristic of a piezoelectric element and generating piezoelectric element characteristic information representing the characteristic of the piezoelectric element; (b) providing an expendable tank configured to store the expendable; (c) attaching the piezoelectric element, a non-volatile memory, and a detection signal generation circuit to the expendable tank, the detection signal generation circuit being configured to charge and discharge the piezoelectric element, and generates a detection signal including information representing a cycle of remaining vibration of the piezoelectric element after the discharge; (c) setting discharge characteristic of the piezoelectric element according to the piezoelectric element characteristic information; and (d) recording setting information representing the set discharge characteristic, into the non-volatile memory. The cycle is available to determine whether the residual quantity of the expendable stored in the expendable tank is greater than a preset level.

The first manufacturing method of the invention measures the characteristic of the piezoelectric element, generates the piezoelectric element characteristic information, and sets the discharge characteristic of the piezoelectric element according to the generated piezoelectric element characteristic information. This method does not require manual adjustment and thereby effectively simplifies the setting operation of the discharge characteristic. The method accordingly relives the load of setting the discharge characteristic of the piezoelectric element due to a variation in characteristic of the piezoelectric element. The measurement of the characteristic of the piezoelectric element may be carried out at the time of product inspection of the piezoelectric element, for reduction of the load of the measurement.

In this configuration of the manufacturing method, the step (a) may comprises the step of measuring the characteristic of the piezoelectric element, and classifying a result of the measurement into one of multiple ranks, and the step (c) may comprise the step of setting the discharge characteristic of the piezoelectric element according to the classified rank. This configuration is easy to implement.

The second application of the manufacturing method is a method of manufacturing an expendable container capable of measuring a residual quantity of stored expendable. The method comprises the steps of: (a) providing an expendable tank configured to store the expendable; (b) attaching a piezoelectric element, a non-volatile memory, and a circuit configured to charge and discharge the piezoelectric element, to the expendable tank; (c) setting a discharge characteristic of the piezoelectric element in a variable manner; (d) determining a capability of the measurement; and (e) recording the setting of the discharge characteristic into the non-volatile memory. The step (d) comprises the steps of: (d-1) charging the piezoelectric element; (d-2) discharging the piezoelectric element; (d-3) generating a detection signal including information representing a cycle of remaining vibration of the piezoelectric element after the discharge; (d-4) determining whether the residual quantity of the expendable stored in the expendable tank is measurable, in response to the detection signal; and (d-5) setting a different value from a current setting of the discharge characteristic on which the measurement is impossible, to the discharge characteristic, and returning to the step (d), in the case of determination of immeasurable. The cycle is available to determine whether the residual quantity of the expendable is greater than a preset level.

The second manufacturing method of the invention automatically retrieves the measurable setting state by trial and error to relive the load of setting the discharge characteristic. The setting is implemented as part of product inspection of the expendable container.

The second container of the invention is an expendable container capable of measuring a residual quantity of stored expendable. The expendable container comprises: an expendable tank configured to store the expendable and has a piezoelectric element attached thereto; a detection signal generation circuit configured to charge and discharge the piezoelectric element, and generate a detection signal including cycle information, the cycle information representing a cycle of an output voltage wave of the piezoelectric element after the discharge; and a non-volatile memory configured to store discharge characteristic setting information used to set a discharge characteristic of the piezoelectric element, according to piezoelectric element characteristic information representing a characteristic of the piezoelectric element; and a control module configured to control the charge and the discharge of the piezoelectric element. The cycle is available to determine whether the residual quantity of the expendable stored in the expendable tank is greater than a preset level, and the control module is capable of setting the discharge characteristic of the piezoelectric element according to the piezoelectric element characteristic information and the discharge characteristic setting information.

The second expendable container of the invention is designed to vary the discharge characteristic of the piezoelectric element according to the information on the characteristic of the piezoelectric element. Namely the discharge characteristic is readily settable by simply giving the information on the characteristic of the piezoelectric element to the expendable container.

In this configuration of the container, the piezoelectric element characteristic information represents a rank selected among multiple ranks according to a result of measurement of the characteristic of the piezoelectric element, and the control module sets the discharge characteristic of the piezoelectric element according to the selected rank.

The present invention may also be realized in various other forms, such as a residual quantity measuring device, a residual quantity measuring control method, a residual quantity measuring control device, and a computer program for realizing the functions of such a method or device by means of a computer, a computer-readable recording medium having such a computer program stored thereon, a data signal including such a computer program and embodied in a carrier wave, a print head, and a cartridge, and a combination thereof.

### Brief Description of the Drawings

Fig. 1 is a perspective showing the appearance of an ink cartridge 100 in one embodiment of the invention;
Fig. 2 is sectional views showing a sensor SS attached to side wall of a casing 140 of the ink cartridge 100;
Fig. 3 is a block diagram showing a logic circuit 130 included in the ink cartridge 100;
Fig. 4 is a circuit diagram showing the circuit structure of a residual ink quantity detection circuit 230 and the sensor SS;
Fig. 5 is a block diagram showing the structure of a pulse counter 235 included in the residual ink quantity detection circuit 230;
Fig. 6 is a flowchart showing a residual ink quantity measurement process executed in the embodiment of the invention;
Fig. 7 is a timing chart showing the operations of the residual ink quantity detection circuit 230 and the sensor SS;
Fig. 8 shows a variation in applied voltage (potential difference from the grounding potential) of a piezoelectric element PZT;
Fig. 9 shows a variation in frequency response function (Transfer Function) of a sensor vibration system including the sensor SS;
Fig. 10 shows generation of voltage in the piezoelectric element PZT in response to discharge of the piezoelectric element PZT;
Fig. 11 shows generation of voltage in the piezoelectric element PZT in response to discharge of the piezoelectric element PZT;
Fig. 12 shows the details of a discharge characteristic setting process executed in the embodiment of the invention;
Fig. 13 is a flowchart showing the discharge characteristic setting process executed in the embodiment of the invention;
Fig. 14 shows a mapping of sensor rank to settings in a discharge time constant adjustment resistive circuit; and
Fig. 15 shows a voltage waveform representing a discharge characteristic of the piezoelectric element PZT in a modified example.

### Best Modes of Carrying Out the Invention

One mode of carrying out the invention is discussed below as a preferred embodiment in the following sequence:
A. Structure of Ink Cartridge in Embodiment of the Invention
B. Electrical Structure of Ink Cartridge in Embodiment of the Invention
C. Circuit Structure of Residual Ink Quantity Detection Unit in Embodiment of the Invention
D. Residual Ink Quantity Measurement Process in Embodiment of the Invention
E. Details of Discharge Characteristic Setting Process in Embodiment of the Invention
F. Method of Discharge Characteristic Setting Process in Embodiment of the Invention
G. Modifications

### A. Structure of Ink Cartridge

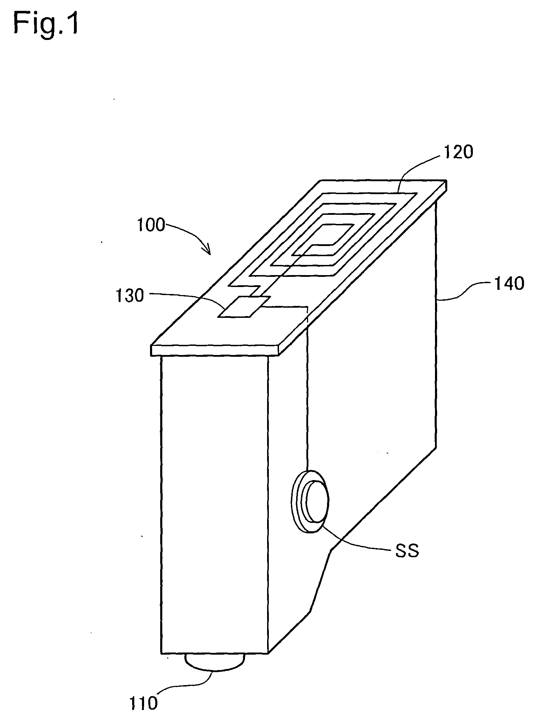

Fig. 1 is a perspective showing the appearance of an ink cartridge 100 in the embodiment of the invention. The ink cartridge 100 has a casing 140 to keep one ink as an expendable therein. An ink supply port 110 is formed on the bottom of the casing 140 to feed ink to a printer as discussed below. An antenna 120 and a logic circuit 130 are located on the top of the casing 140 and are used to establish wireless communication with the printer. A sensor SS is attached to the side wall of the casing 140 and is used to measure a residual quantity of ink. The sensor SS is electrically linked to the logic circuit 130.

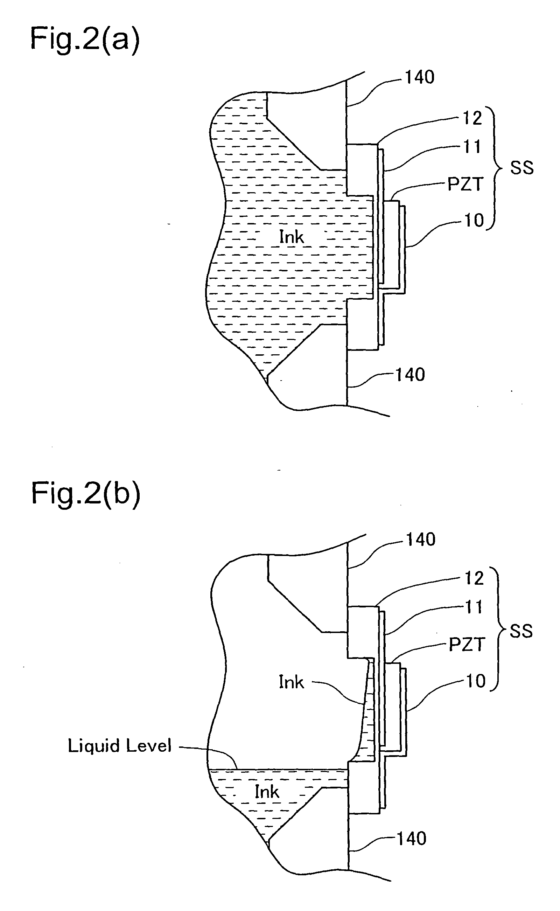

Fig. 2 is sectional views showing the sensor SS attached to the side wall of the casing 140 of the ink cartridge 100. The sensor SS includes a piezoelectric element PZT that has piezoelectric characteristics including piezoelectric effect and inverse piezoelectric effect, two electrodes 10 and 11 that function to apply a voltage to the piezoelectric element PZT, and a sensor attachment 12. The electrodes 10 and 11 are connected with the logic circuit 130. The sensor attachment 12 is a thin-film structural element of the sensor SS to transmit vibrations from the piezoelectric element PZT to the ink and the casing 140.

In the state of Fig. 2(a), the residual quantity of ink exceeds a preset level, and the liquid level of ink is higher than the position of the sensor SS (see Fig. 1). In the state of Fig. 2(b), the residual quantity of ink does not reach the preset level, and the liquid level of ink is lower than the position of the sensor SS. As clearly understood from these drawings, when the liquid level of ink is higher than the position of the sensor SS, the sensor SS, the casing 140, and all the ink work as a vibration body. When the liquid level of ink is lower than the position of the sensor SS, on the other hand, the sensor SS, the casing 140, and only a trace amount of ink adhering to the sensor SS work as a vibration body. This means that the vibration characteristics about the piezoelectric element PZT vary with a variation in residual quantity of ink. The technique of this embodiment takes advantage of such a variation of the vibration characteristics to measure the residual quantity of ink. The details of the measurement method will be discussed later.

### B. Electrical Structure of Ink Cartridge

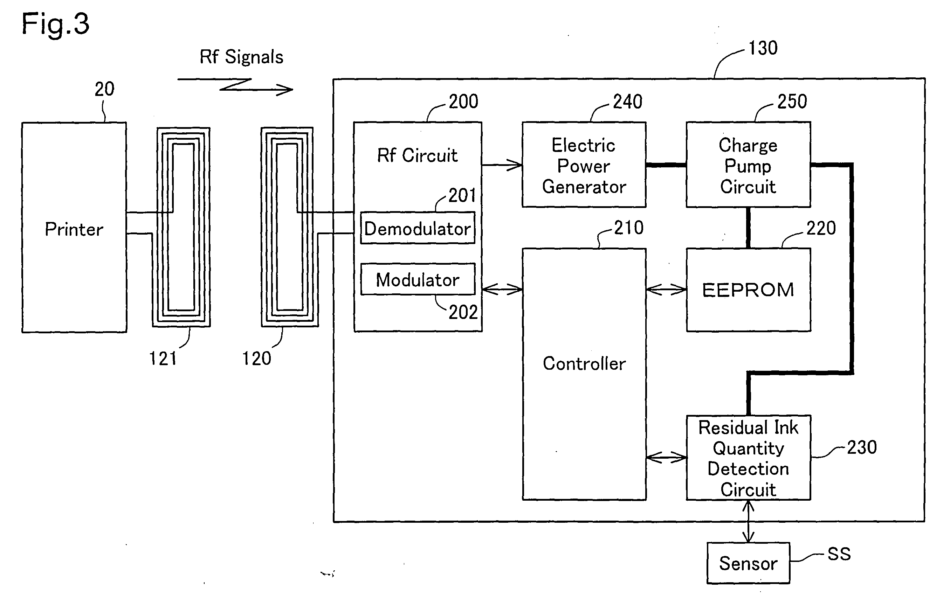

Fig. 3 is a block diagram showing the logic circuit 130 included in the ink cartridge 100. The logic circuit 130 includes an RF circuit 200, a controller 210, an EEPROM 220 as a non-volatile memory, a residual ink quantity detection circuit 230, an electric power generator 240, and a charge pump circuit 250.

The RF circuit 200 has a demodulator 201 that demodulates radio wave received from a printer 20 via the antenna 12, and a modulator 202 that modulates signals received from the controller 210 and sends the modulated signals to the printer 20. The printer 20 uses its antenna 121 to send baseband signals on a carrier wave of a preset frequency to the ink cartridge 100. The ink cartridge 100, on the other hand, does not use a carrier wave but changes a load of its antenna 120 to vary an impedance of the antenna 121. The ink cartridge 100 takes advantage of such a variation in impedance to send signals to the printer 20. The ink cartridge 100 and the printer 20 establish two-way communication in this manner.

The electric power generator 240 rectifies the carrier wave received by the RF circuit 200 and generates electric power of a specified voltage (for example, 5 V). The electric power generator 240 supplies the generated electric power to the RF circuit 200, the controller 210, the EEPROM 220, and the charge pump circuit 250. The charge pump circuit 250 boosts up the received electric power to a preset level of voltage demanded by the sensor SS and supplies the boosted-up electric power to the residual ink quantity detection circuit 230.

### C. Circuit Structure of Residual Ink Quantity Detection Unit in the Embodiment of the Invention

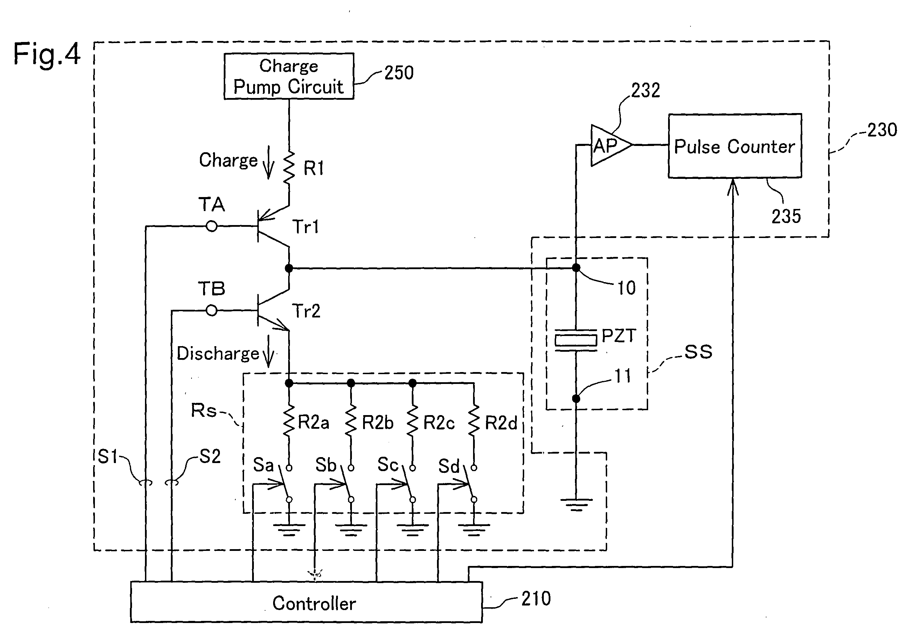

Fig. 4 is a circuit diagram showing the circuit structure of the residual ink quantity detection circuit 230 and the sensor SS. The residual ink quantity detection circuit 230 includes a PNP transistor Tr1, an NPN transistor Tr2, a charge-time constant adjustment resistor R1, a discharge time constant adjustment resistive circuit Rs, an amplifier 232, and a pulse counter 235. The sensor SS is connected to the residual ink quantity detection circuit 230 by the two electrodes 10 and 11 (see Fig. 2).

The discharge time constant adjustment resistive circuit Rs has four discharge time constant adjustment resistors R2a, R2b, R2c, and R2d and four corresponding switches Sa, Sb, Sc, and Sd respectively connected therewith. The four switches Sa, Sb, Sc, and Sd are opened and closed by the controller 210. The controller 210 sets a value of resistance in the discharge time constant adjustment resistive circuit Rs by a combination of the open-close positions of these four switches Sa, Sb, Sc, and Sd.

The PNP transistor Tr1 has the following connections. Its base is linked to a terminal TA that receives a control output from the controller 210. Its emitter is linked to the charge pump circuit 250 via the charge-time constant adjustment resistor R1. Its collector is linked to one electrode 10 of the sensor SS, whereas the other electrode 11 of the sensor SS is grounded.

The NPN transistor Tr2 has the following connections. Its base is linked to a terminal TB that receives a control output from the controller 210. Its collector is linked to one electrode 10 of the sensor SS. Its emitter is grounded via the discharge time constant adjustment resistive circuit Rs with the variable setting of resistance.

The pulse counter 235 is connected with the electrode 10, which is linked to the piezoelectric element PZT, via the amplifier 232 that amplifies the output voltage of the piezoelectric element PZT. The pulse counter 235 is connected to the controller 210 to receive a control output from the controller 210.

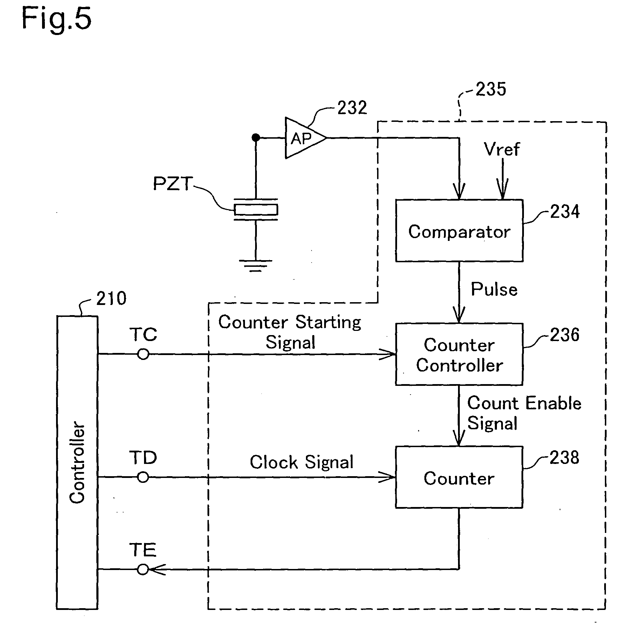

Fig. 5 is a block diagram showing the structure of the pulse counter 235 included in the residual ink quantity detection circuit 230. The pulse counter 235 has a comparator 234, a counter controller 236, a counter 238, and a non-illustrated oscillator. The comparator 234 receives an output of the amplifier 232 as an object of analysis and a reference potential Vref. The counter controller 236 and the counter 238 are linked to the controller 210. The residual ink quantity detection circuit 230 and the reference potential Vref respectively correspond to the 'detection signal generation circuit' and the 'reference voltage for residual quantity detection' of the invention. The counter controller 236 and the counter 238 correspond to the 'signal generator' of the invention.

### D. Residual Ink Quantity Measurement Process in the Embodiment of the Invention

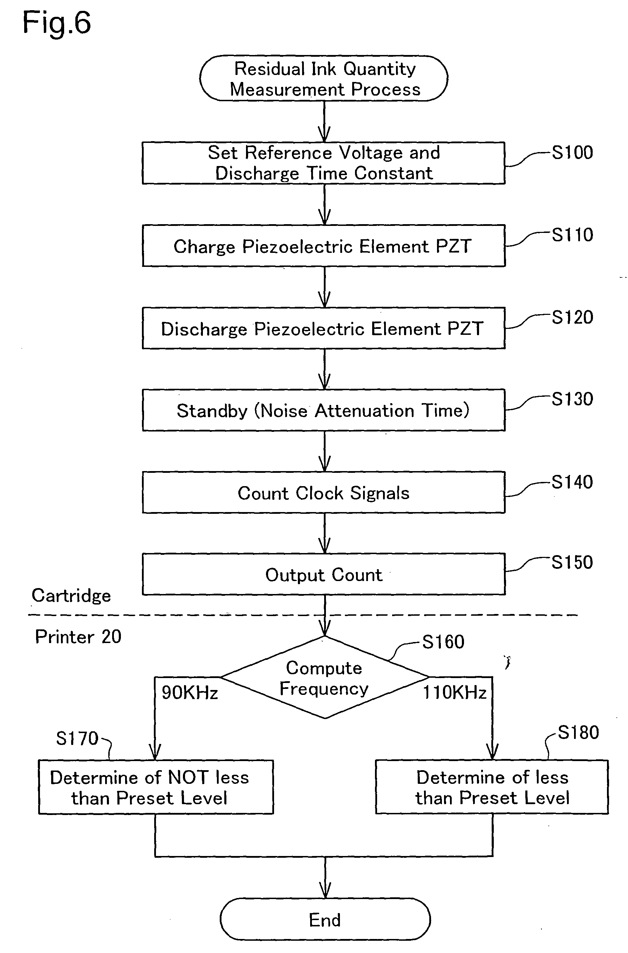

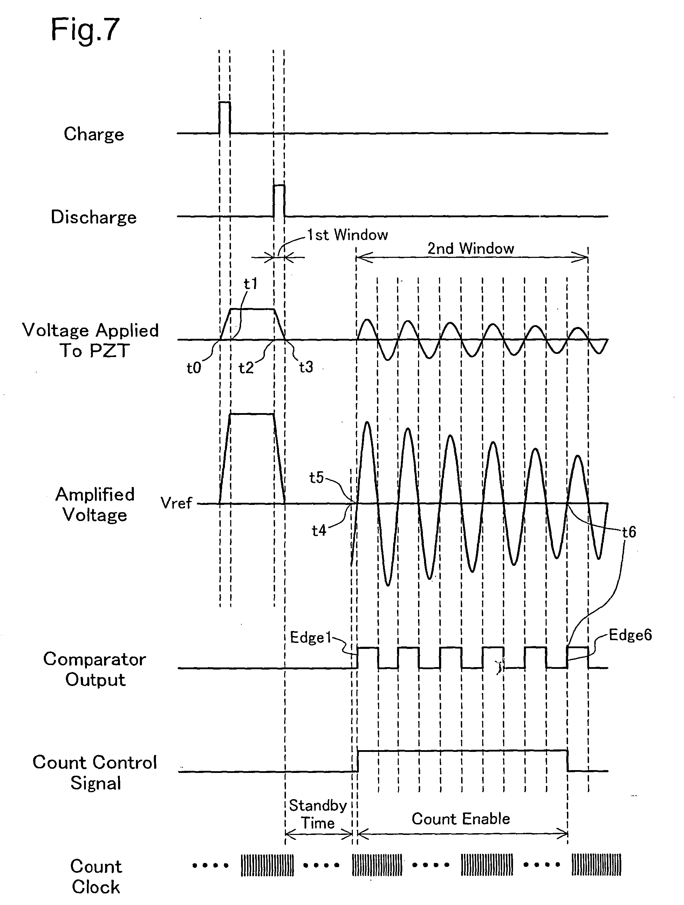

Fig. 6 is a flowchart showing a residual ink quantity measurement process executed in the embodiment of the invention. Fig. 7 is a timing chart showing the operations of the residual ink quantity detection circuit 230 and the sensor SS in this measurement process. This measurement process is executed by both the ink cartridge 100 and the printer 20, in response to the user's power switch-on operation of the printer 20. The ink cartridge 100 counts the number of clock signals CLK generated while the pulses of the output voltage wave from the piezoelectric element PZT reach a predetermined number (for example, 5). The printer 20 computes the frequency of the voltage wave from the count and estimates a remaining state of ink according to the computed frequency. The detailed procedure is discussed below.

At step S100, the controller 210 (see Fig. 4) regulates the open-close positions of the four switches Sa, Sb, Sc, and Sd included in the discharge time constant adjustment resistive circuit Rs to set a discharge time constant of the piezoelectric element PZT. The details of the discharge time constant setting process will be discussed later.

At step S110, the controller 210 (Fig. 4) outputs the control output signal to the terminal TA to switch the transistor Tr1 ON at the time t0. A flow of electric current then runs from the charge pump circuit 250 to the piezoelectric element PZT to apply a voltage onto the piezoelectric element PZT having a capacitance. In the initial stage, the two transistors Tr1 and Tr2 are both set OFF.

The controller 210 switches the transistor Tr1 OFF at the time point t1 and causes the residual ink quantity detection circuit 230 to stand by until the time point t2. The standby to the time point t2 attenuates the vibrations of the piezoelectric element PZT, which are caused by application of the voltage. A non-illustrated internal clock of the controller 210 is used to measure the time.

At step S120, the controller 210 (Fig. 4) sends a preset control output signal to the terminal TB at the time point t2 to switch the transistor Tr2 ON at the time point t2 and OFF at the time point t3. This enables discharge of the piezoelectric element PZT for a time period between the time point t2 and the time point t3. The piezoelectric element PZT is deformed abruptly by the discharge to vibrate a sensor vibration system, which includes the sensor SS (Fig. 2), the casing 140 in the vicinity of the sensor SS, and ink.

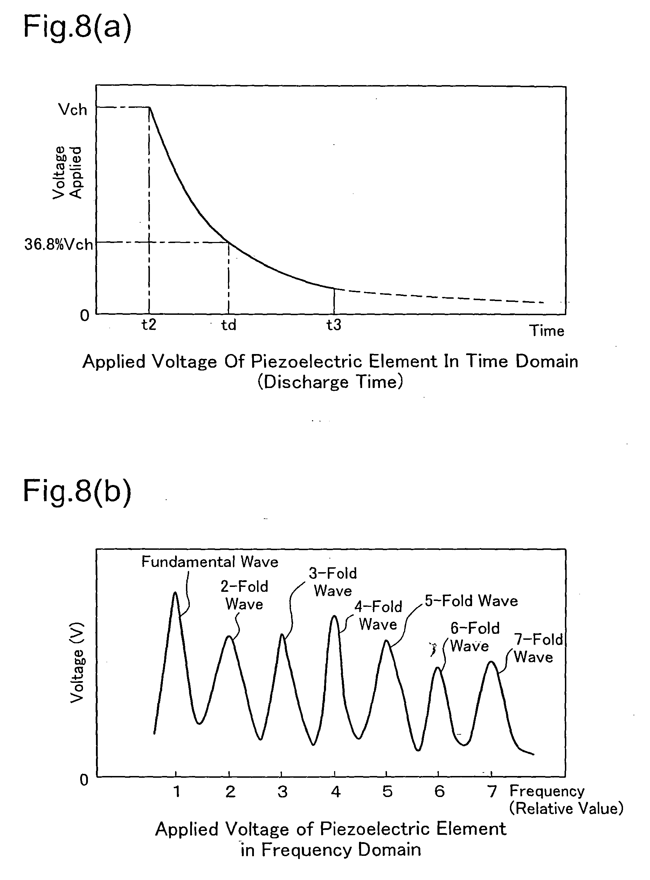

Fig. 8 shows a discharge waveform of the piezoelectric element PZT in the discharge time. Fig. 8(a) shows a discharge waveform in a time domain. The data given below show the potentials at respective time points:
(1) discharge start time t2: a potential Vch (an output potential of the charge pump circuit 250);
(2) time constant time td: a potential decreasing from the potential Vch by 63.2%; and
(3) discharge end time t3: a potential slightly higher than the ground potential (see Fig. 8).

Here the time constant time td represents a time point when the time constant elapses from the discharge start time t2. In the specification hereof, the discharge time represents a time period between the discharge start time t2 and the discharge end time t3 when the piezoelectric element PZT is electrically connected with the grounding.

Fig. 8(b) shows a fundamental harmonic and multiple higher harmonics of the applied voltage in a frequency domain. This shows results of Fourier analysis of a hypothetic waveform on the assumption that the waveform of the applied voltage of the piezoelectric element PZT in the first window (Fig. 7) is repeated permanently. The voltage waveform of the applied voltage gives a fundamental harmonic having a fundamental frequency or the reciprocal of the discharge time and higher harmonics having frequencies of integral multiples. On condition that the deformation of the piezoelectric element PZT has a linear relation to the applied voltage, the waveform of the vibration force coincides with the waveform of the applied voltage.

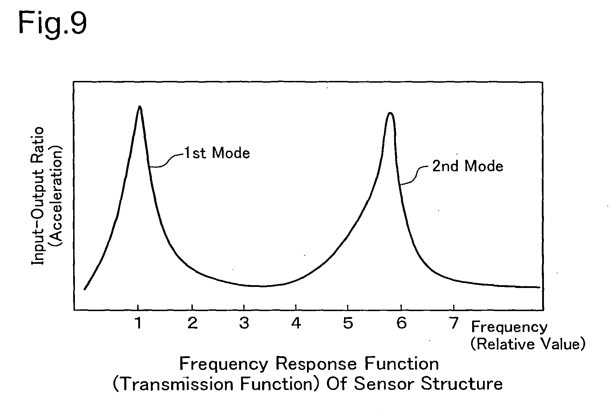

Fig. 9 shows variations in frequency response function (Transfer Function) of the sensor vibration system including the sensor SS. The frequency response function represents a relation between input and output of a vibration transmission system included in the sensor vibration system and is expressed by a ratio of an input Fourier spectrum to an output Fourier spectrum. The frequency response function of the embodiment is a ratio of a Fourier spectrum of the discharge waveform of the piezoelectric element PZT (having a linear relation to the vibration force) to a Fourier spectrum of the free vibration of the sensor vibration system.

The first mode and the second mode in Fig. 9 are two eigenmodes of the sensor vibration system. The eigenmode represents a vibration form of the sensor vibration system. Any object has a specific form in vibration and can not vibrate in any other form. This specific form corresponds to the eigenmode. The eigenmode of the object is identified by modal analysis.

It is assumed that the ink cartridge 100 has the following two vibration modes:
(1) In the first mode, a recess of the sensor SS (see Fig. 2) is deformed like a bowl with the edges of the recess as nodes of vibration and the center of the recess as the largest-amplitude area of vibration; and
(2) In the second mode, the recess of the sensor SS is deformed like a seesaw with both the edges and the center of the recess as nodes of vibration and the left and right middle areas between the edges and the center as the largest-amplitude areas of vibration.

Application of vibration causes free vibration in the sensor vibration system only at eigenfrequencies of the first mode and the second mode. Even when the piezoelectric element PZT applies vibration to the sensor vibration system at any other frequencies, free vibration arising in the sensor vibration system is extremely small and is immediately attenuated.

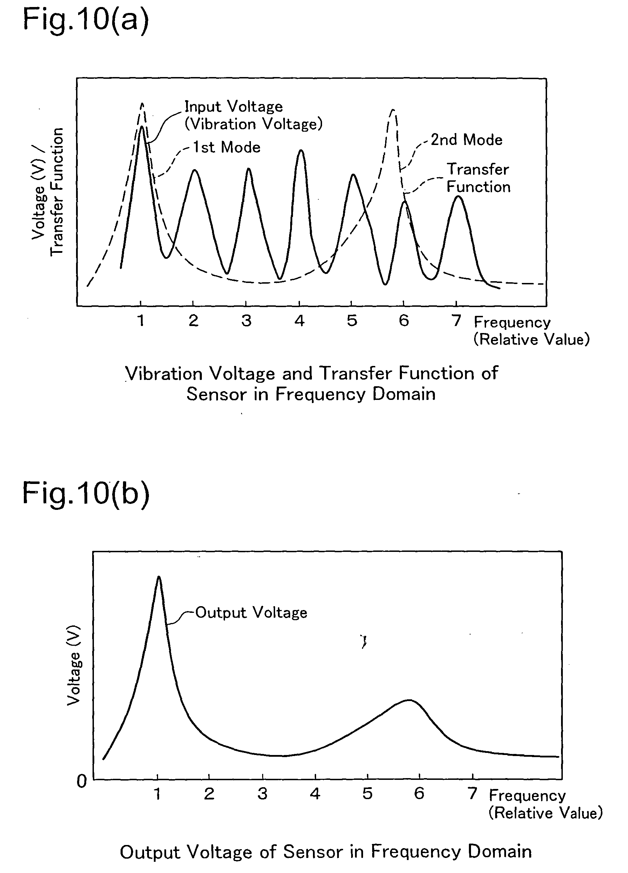

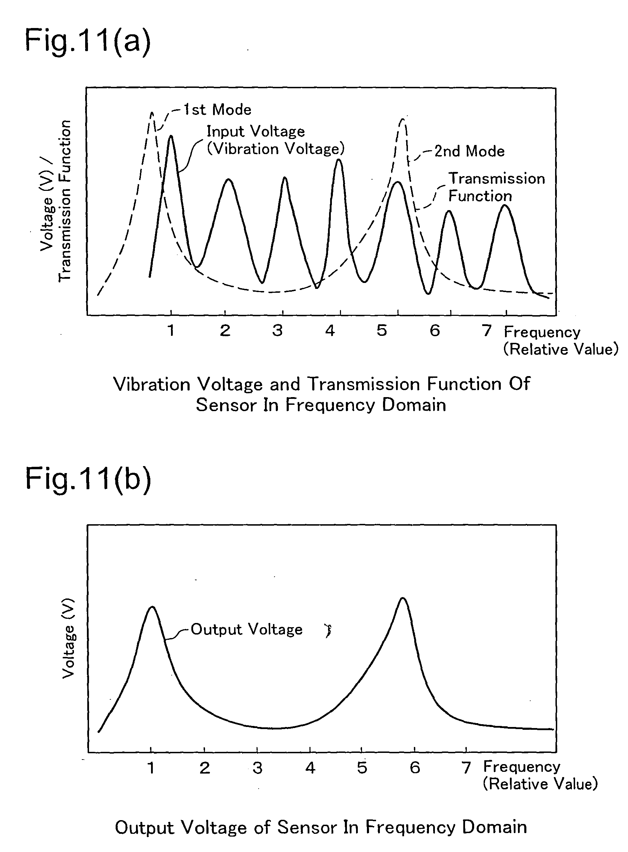

Fig. 10 shows generation of voltage in the piezoelectric element PZT in response to the free vibration of the piezoelectric element PZT. A solid line curve and a dotted line curve of Fig. 10(a) respectively show a waveform of the applied voltage (in the discharge time) in a frequency domain (see Fig. 8(b)), and the frequency response function in the sensor vibration system. Fig. 11(b) shows an output voltage of the piezoelectric element PZT.

As clearly understood from the graph of Fig. 10(a), the frequency of the fundamental harmonic of the discharge waveform is regulated to be substantially coincident with the eigenfrequency of the first mode in the sensor vibration system and to prevent the presence of any higher harmonic of the discharge waveform having a frequency coincident with the frequency of the second mode in the sensor vibration system. Significant free vibration accordingly arises only at the eigenfrequency of the first mode in the sensor vibration system. Namely a large voltage is generated in the piezoelectric element PZT only at the eigenfrequency of the first mode in the sensor vibration system (see Fig. 10(b)). This agrees well with the results of Fourier analysis of a hypothetic waveform on the assumption that the waveform of the output voltage of the piezoelectric element in the second window(see Fig. 7) is repeated permanently. The standby time terminates at the time point t4 as mentioned above.

The controller 210 (Fig. 5) outputs a counter starting signal to the counter controller 236 at the time point t4. The counter controller 236 receives the counter starting signal and outputs a count enable signal to the counter 238. The output of the count enable signal starts at a first rising edge Edge1 of a comparator output after the reception of the counter enable signal (at a time point t5) and terminates at a sixth rising edge Edge6 (at a time point t6). In this embodiment, the grounding potential is set to the reference potential Vref used as the reference for comparison in the comparator 234.

At subsequent step S140, the counter 238 counts the number of clocks. Counting the number of clocks is carried out only while the counter 238 receives the count enable signal. The number of clocks is accordingly counted for a time period between the first rising edge Edge1 and the sixth rising edge Edge6 of the comparator output. The procedure counts up the number of clocks corresponding to five cycles of the voltage wave output from the piezoelectric element PZT.

At step S150, the counter 238 outputs the resulting count, which is sent to the printer 20. The printer 20 calculates the frequency of the voltage wave output from the piezoelectric element PZT from the received count and a known clock cycle.

At step S160, the printer 20 determines whether the residual quantity of ink exceeds the preset level, based on the calculated frequency. For example, it is assumed that the frequency is about 90 kHz when the liquid level of ink is higher than the position of the sensor SS, while being about 110 kHz when the liquid level of ink is lower than the position of the sensor SS. In this example, when the calculated frequency is 105 kHz, it is determined that the residual quantity of ink does not reach the preset level (steps S170 and S180).

### E. Details of Discharge Characteristic Setting Process in the Embodiment of the Invention

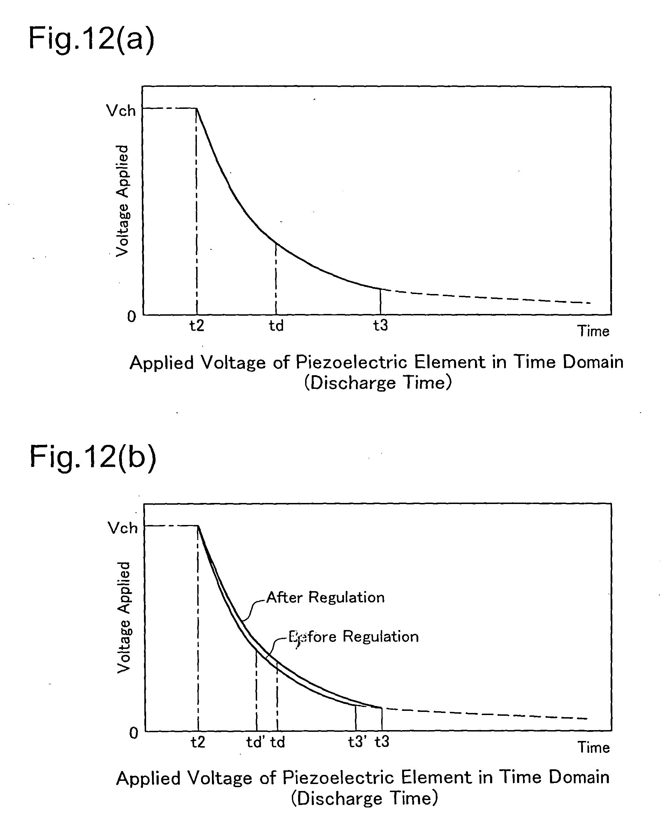

Fig. 11 shows generation of voltage in the piezoelectric element PZT in response to the free vibration of the piezoelectric element PZT, as in Fig. 10. The difference is that generation of voltage in Fig. 12 is prior to adequate setting of the discharge characteristics. Before regulation of the discharge characteristics, the frequency of the fundamental harmonic of the applied voltage in the discharge time is not coincident with the eigenfrequency of the first mode in the sensor vibration system, while a higher harmonic of the applied voltage in the discharge time is coincident with the eigenfrequency of the second mode in the sensor vibration system.

High voltages are accordingly generated at the eigenfrequency of the second mode, as well as at the eigenfrequency of the first mode. The voltage wave at the eigenfrequency of the second mode gives a significantly large noise to interfere with measurement of the residual quantity of ink.

Fig. 12 shows a discharge characteristic setting process in the embodiment of the invention. Fig. 12(a) shows a discharge waveform after setting the discharge characteristics and is identical with Fig. 8(a). Fig. 12(b) shows a discharge waveform before setting the discharge characteristics.

In this illustrated example, a discharge time constant and a discharge time are set as the discharge characteristics. The discharge time constant is the product of a resistance between the piezoelectric element PZT and grounding and a capacitance of the piezoelectric element PZT. The discharge time constant is set by regulating the resistance in the discharge time constant adjustment resistive circuit Rs. The resistance in the discharge time constant adjustment resistivity circuit Rs is regulated by selecting an adequate combination of the open-close positions of the discharge time constant adjustment resistance control switches Sa, Sb, Sc, and Sd.

The discharge time is a time period when the piezoelectric element PZT is electrically connected with the grounding as mentioned above. More specifically the discharge time is a time period when the controller 210 sets the transistor Tr2 in the ON position. The controller 210 freely sets the discharge time.

The procedure changes the discharge time constant from a time constant Td' to a time constant Td, while extending the discharge end time from t3' to t3 to vary the discharge time. This gives the discharge waveform shown in Fig. 12(a).

The ink cartridge 100 of the embodiment varies the discharge characteristics of the piezoelectric element PZT. Such variation changes the characteristics of the remaining vibration after the discharge to have a higher S/N ratio suitable for detection of the residual quantity of ink, thus enhancing the reliability of the measurement.

### F. Method of Discharge Characteristic Setting Process in Embodiment of the Invention

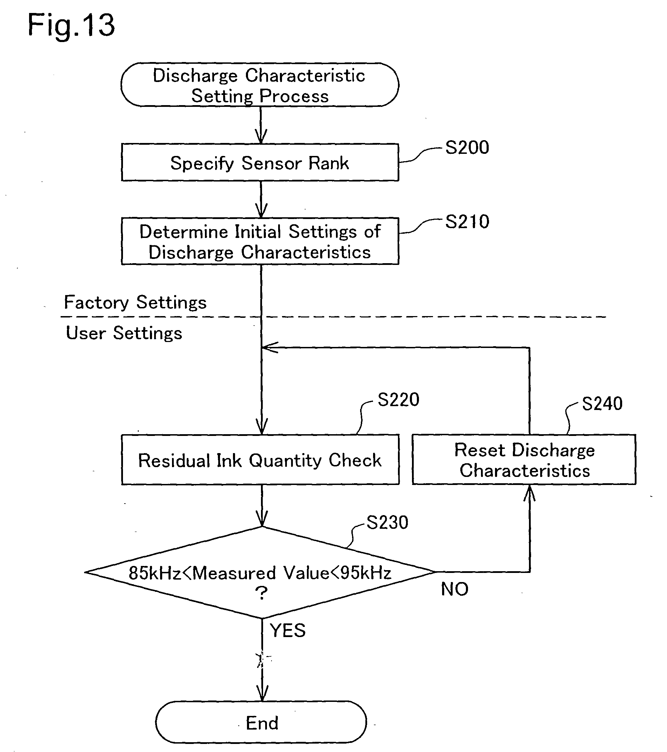

Fig. 13 is a flowchart showing the discharge characteristic setting process executed in the embodiment of the invention. The discharge characteristic setting process is carried out as the factory settings and as the user's settings during the use of the ink cartridge 100. The processing of steps S200 and S210 corresponds to the factory settings, whereas the processing of and after step S220 corresponds to the user's settings during the use of the ink cartridge 100. For the simplicity of explanation, the process of this illustrated example sets only the discharge time constant as the discharge characteristic.

At step S200, the manufacturer of the sensor SS specifies the sensor rank of the sensor SS. The sensor rank represents the characteristics of the sensor, for example, a variation in distortion with a variation of the applied voltage. The sensor rank is specified by actual measurement of the characteristics of the sensor. In the structure of this embodiment, the sensor SS is classified in one of eight sensor ranks A to H. The sensor rank corresponds to the 'piezoelectric element characteristic information' of the invention.

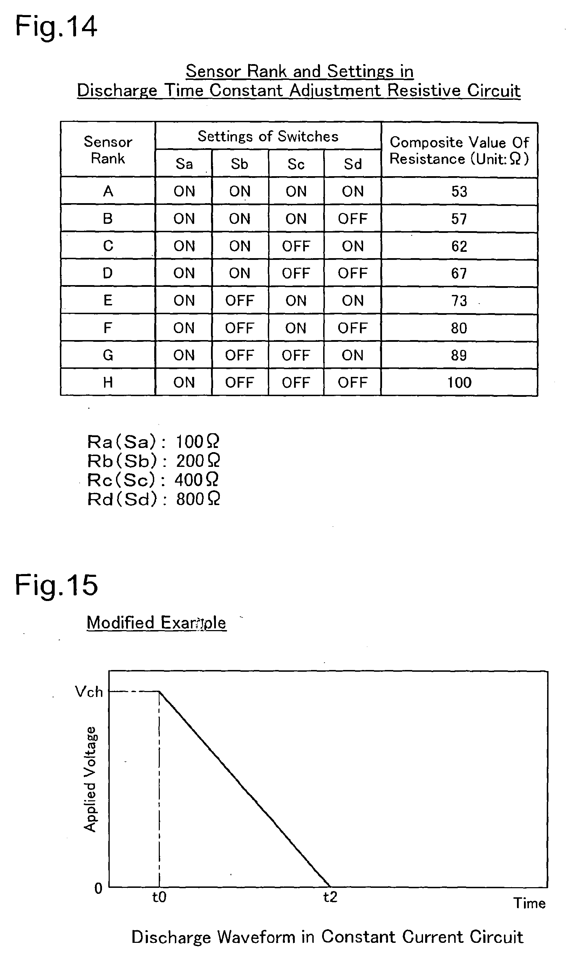

At step S210, the manufacturer of the ink cartridge 100 determines an initial setting of the discharge characteristic corresponding to the specified sensor rank. The initial setting of the discharge characteristic is determined according to a preset mapping of the sensor rank to the settings in the discharge time constant adjustment resistive circuit Rs (Fig. 14). The mapping of the sensor rank to the settings in the discharge time constant adjustment resistive circuit Rs corresponds to the 'discharge characteristic setting information' of the invention.

For example, at a sensor rank B, the three switches Sa, Sb, and Sc among the four switches Sa, Sb, Sc, and Sd included in the discharge time constant adjustment resistive circuit Rs are set ON, while the remaining switch Sd is set OFF. Resistances Ra, Rb, Rc, and Rd under control of connection by the open-close positions of the switches Sa, Sb, Sc, and Sd are respectively set equal to 100 Ω, 200 Ω, 400 Ω, and 800 Ω (see Fig. 14).

The current setting and the sensor rank are recorded in the EEPROM 220 as the non-volatile memory included in the logic circuit 130 of the ink cartridge 100. The information showing that the residual quantity of ink is not less than a preset level is also recorded at the time of ink supply. The information representing the discharge characteristic set by the latest measurement is recorded in the non-volatile memory. The recorded setting is used for measurement, so that the reliability of the measurement is enhanced readily.

At step S220, the user carries out a residual ink quantity check, which is automatically executed when the ink cartridge 100 is attached to the printer 20. The printer 20 performs the residual ink quantity check in the following sequence:
(1) confirming that the residual quantity of ink is not less than the preset level, based on the information on the residual quantity of ink recorded in the EEPROM 220;
(2) setting the discharge time constant adjustment resistive circuit Rs, based on the information recorded in the EEPROM 220; and
(3) executing the processing of steps S110 to S160 in the residual ink quantity measurement process (see Fig. 6) described above.

At step S230, the printer 20 determines whether the measured value is in a specific allowable range. The specific allowable range is set to be 90 kHz ± 5 kHz, which is the frequency when the residual quantity of ink is not less than the preset level. When it is determined that the measured value is in the specific allowable range, the discharge characteristic setting process is terminated. When it is determined that the measured value is out of the specific allowable range, on the other hand, the process goes to step S240. The determination of whether the measured value is in the specific allowable range corresponds to 'the determination of whether measurement of the residual quantity of the expendable is available' in the invention.

At step S240, the printer 20 sequentially changes the settings of the discharge time constant adjustment resistive circuit Rs in a predetermined order and repeats the measurement. For example, when the current sensor rank recorded in the EEPROM 220 is C, the process sequentially changes the sensor rank to B, D, A, and E and repeats the measurement with each setting of the sensor rank, until the measured value enters the specific allowable range. This automatically sets the discharge characteristic to an adequate value that makes the measurement of the residual quantity of ink available, thus advantageously ensuring adequate setting of the discharge characteristic.

The processing of steps S220 to S240 may be executed by the manufacturer, instead of the user. The processing of steps S200 and S210 may be omitted, regardless of the performer of the settings, the manufacturer or the user.

### G. Modifications

The embodiments discussed above are to be considered in all aspects as illustrative and not restrictive. There may be many modifications, changes, and alterations without departing from the scope or spirit of the main characteristics of the present invention. Some examples of possible modification are given below.

G-1. The piezoelectric element PZT used as the sensor element in the above embodiments may be replaced by Rochelle salt (potassium sodium tartrate). The sensor used in this invention is to take advantage of a piezoelectric element having two characteristics, that is, inverse piezoelectric effect of deformation by charge or discharge and piezoelectric effect of generation of voltage due to deformation.

G-2. The procedure of the embodiment regulates the ON-time of the transistor Tr2 and the discharge time constant defined by the piezoelectric element and the discharge time constant adjustment resistance to change the discharge characteristics. The regulation may be restricted to only either of the ON-time and the resistance. It may be configured to vary a discharge characteristic with a constant current circuit which output a voltage waveform as shown in Fig. 15 added on the circuit for discharge.

G-3. The procedure of the embodiment regulates the discharge time constant by varying the resistance in the discharge time constant adjustment resistive circuit. One possible modification may vary a capacitance of the piezoelectric element connected in series with a capacitor to regulate the discharge time constant.

G-4. In the above embodiments, the subject of measurement of the residual quantity is ink. Another possible subject of measurement is toner. In general, the subject of measurement of the residual quantity in the invention may be any expendable that decreases in quantity with use of a device.

G-5. The method of the discharge characteristic setting process of the embodiment sets the discharge characteristics of the piezoelectric element according to the preset table that maps the sensor rank to the settings of the discharge time constant adjustment resistive circuit Rs. One possible modification may measure the characteristic of the piezoelectric element as a characteristic value representing the relation between the voltage and the distortion and set the discharge characteristics corresponding to the result of the measurement according to an algorithm stored in a non-volatile memory or in a computer.

The algorithm may be set to calculate optimum values of the discharge characteristics, for example, the discharge time constant and the discharge time, from the characteristic value according to specified computational expressions and select the settings closest to the optimum values. In general, the discharge characteristic setting process of the invention is designed to set the discharge characteristics of the piezoelectric element according to piezoelectric element characteristic information representing the characteristics of the piezoelectric element. This algorithm corresponds to the 'discharge characteristic setting information' of the invention.

When part or all of the functions of the invention are attained by the software configuration, the software (computer programs) may be stored in computer-readable recording media. The terminology 'computer-readable recording media' in this invention is not restricted to portable recording media, such as flexible disks and CD-ROMs, but also includes internal storage devices of the computer like diverse RAMs and ROMs, as well as external storage devices connected to the computer, such as hard disk units.

### Industrial Applicability

The technique of the present invention is applicable to expendable containers used for output devices of the computer.

## Claims

1. An expendable container capable of measuring a residual quantity of stored expendable, the expendable container comprising:
an expendable tank configured to store the expendable and has a piezoelectric element attached thereto;
a detection signal generation circuit configured to charge and discharge the piezoelectric element, and generate a detection signal including cycle information, the cycle information representing a cycle of an output voltage wave of the piezoelectric element after the discharge; and
a control module configured to control the charge and the discharge of the piezoelectric element, wherein
the cycle is available for determining whether the residual quantity of the expendable is greater than a preset level, and
the control module is capable of vary a discharge characteristic of the piezoelectric element.

2. The expendable container in accordance with claim 1,
wherein the control module is capable of varying a discharge time constant of the piezoelectric element.

3. The expendable container in accordance with either one of claims 1 and 2,
wherein the control module is capable of varying a discharge time of the piezoelectric element.

4. The expendable container in accordance with any one of claims 1 to 3, wherein
the detection signal generation circuit comprises:
a voltage generation circuit configured to generate a predetermined potential difference between a first terminal with a higher potential and a second terminal with a lower potential;
the piezoelectric element having one end connected to the second terminal;
a charge control switch connected between the first terminal and the other end of the piezoelectric element, and configured to control on and off charging from the first terminal to the piezoelectric element according to a control output from the control module;
a discharge control switch connected between the other end of the piezoelectric element and the second terminal, and configured to control on and off discharging from the piezoelectric element to the second terminal according to the control output from the control module; and
a resistive circuit connected between the other end of the piezoelectric element and the second terminal, and having a variable resistance, wherein
the control module is configured to control the on-off of the charge control switch, the on-off of the discharge control switch, and the resistance of the resistive circuit.

5. A method of measuring a residual quantity of expendable stored in an expendable container, the method comprising the steps of:
(a) providing an expendable tank configured to store the expendable and has a piezoelectric element attached thereto, and a circuit configured to charge and discharge the piezoelectric element;
(b) setting a discharge characteristic of the piezoelectric element in a variable manner; and
(c) carrying out measurement,
the step (c) comprising:
(c-1) charging the piezoelectric element;
(c-2) discharging the piezoelectric element;
(c-3) generating a detection signal including information representing a cycle of remaining vibration of the piezoelectric element after the discharge; and
(c-4) determining whether the residual quantity of the expendable stored in the expendable tank is greater than a preset level, in response to the detection signal.

6. The method in accordance with claim 5, wherein
the step (c) further comprises the step of determining whether the stored residual quantity of the expendable is measurable in response to the detection signal, and returning a process to the step (b) in the case of determination of immeasurable; and
the step (b) comprises the step of setting a different value from a current setting on which the measurement is immeasurable to the discharge characteristic and proceeding the process to the step (c), in the case of determination of immeasurable.

7. The method in accordance with claim 6, the method further comprising the steps of:
(d) providing a non-volatile memory; and
(e) recording setting information representing a current setting of the discharge characteristic at a time of the measurement, into the non-volatile memory,
wherein the step (b) sets the discharge characteristic according to the setting information read from the non-volatile memory.

8. A computer program for causing a computer to control an expendable container capable of measuring a residual quantity of stored expendable, for setting a discharge characteristic of a piezoelectric element attached to the expendable container,
the expendable container comprising:
an expendable tank configured to store the expendable and has a piezoelectric element attached thereto;
a detection signal generation circuit configured to charge and discharge the piezoelectric element, and generate a detection signal including information representing a cycle of remaining vibration of the piezoelectric element after the discharge;
a control module configured to control the charge and the discharge of the piezoelectric element, and vary a discharge characteristic of the piezoelectric element; and
a non-volatile memory configured to store setting information and residual quantity information, the setting information representing a current setting of the discharge characteristic, and residual quantity information, residual quantity information representing whether the residual quantity of the expendable is greater than a preset level,
the computer program causing the computer to carry out the functions of:
(a) reading out the setting information and the residual quantity information from the non-volatile memory;
(b) setting the discharge characteristic of the piezoelectric element, based on the setting information;
(c) confirming that the residual quantity of the expendable is greater than the preset level, based on the residual quantity information;
(d) generating the detection signal including the information representing the cycle of the remaining vibration of the piezoelectric element after the discharge, according to the confirmation;
(e) receiving the detection signal, and determining whether the residual quantity of the expendable is measurable, in response to the received detection signal;
(f) setting a different value from a current setting of the discharge characteristic on which the measurement is impossible to the discharge characteristic, and returning a process to the step (d) in the case of determination of immeasurable, in response to the determination of measurability; and
(g) recording the setting information representing the current setting of the discharge characteristic, into the non-volatile memory in the case of determination of measurable, in response to the determination of measurability.

9. A method of manufacturing an expendable container capable of measuring a residual quantity of stored expendable, the method comprising the steps of:
(a) measuring a characteristic of a piezoelectric element and generating piezoelectric element characteristic information representing the characteristic of the piezoelectric element;
(b) providing an expendable tank configured to store the expendable;
(c) attaching the piezoelectric element, a non-volatile memory, and a detection signal generation circuit to the expendable tank, the detection signal generation circuit being configured to charge and discharge the piezoelectric element, and generates a detection signal including information representing a cycle of remaining vibration of the piezoelectric element after the discharge;
(c) setting discharge characteristic of the piezoelectric element according to the piezoelectric element characteristic information; and
(d) recording setting information representing the set discharge characteristic, into the non-volatile memory,
wherein the cycle is available to determine whether the residual quantity of the expendable stored in the expendable tank is greater than a preset level.

10. The manufacturing method in accordance with claim 9,
wherein
the step (a) comprises the step of measuring the characteristic of the piezoelectric element, and classifying a result of the measurement into one of multiple ranks, and
the step (c) comprises the step of setting the discharge characteristic of the piezoelectric element according to the classified rank.

11. A method of manufacturing an expendable container capable of measuring a residual quantity of stored expendable, the method comprising the steps of:
(a) providing an expendable tank configured to store the expendable;
(b) attaching a piezoelectric element, a non-volatile memory, and a circuit configured to charge and discharge the piezoelectric element, to the expendable tank;
(c) setting a discharge characteristic of the piezoelectric element in a variable manner;
(d) determining a capability of the measurement; and
(e) recording the setting of the discharge characteristic into the non-volatile memory,
the step (d) comprising the steps of:
(d-1) charging the piezoelectric element;
(d-2) discharging the piezoelectric element;
(d-3) generating a detection signal including information representing a cycle of remaining vibration of the piezoelectric element after the discharge;
(d-4) determining whether the residual quantity of the expendable stored in the expendable tank is measurable, in response to the detection signal; and
(d-5) setting a different value from a current setting of the discharge characteristic on which the measurement is impossible, to the discharge characteristic, and returning to the step (d), in the case of determination of immeasurable,
wherein the cycle is available to determine whether the residual quantity of the expendable is greater than a preset level.

12. An expendable container capable of measuring a residual quantity of stored expendable, the expendable container comprising:
an expendable tank configured to store the expendable and has a piezoelectric element attached thereto;
a detection signal generation circuit configured to charge and discharge the piezoelectric element, and generate a detection signal including cycle information, the cycle information representing a cycle of an output voltage wave of the piezoelectric element after the discharge; and
a non-volatile memory configured to store discharge characteristic setting information used to set a discharge characteristic of the piezoelectric element, according to piezoelectric element characteristic information representing a characteristic of the piezoelectric element; and
a control module configured to control the charge and the discharge of the piezoelectric element, wherein
the cycle is available to determine whether the residual quantity of the expendable stored in the expendable tank is greater than a preset level, and
the control module is capable of setting the discharge characteristic of the piezoelectric element according to the piezoelectric element characteristic information and the discharge characteristic setting information.

13. The expendable container in accordance with claim 12,
wherein
the piezoelectric element characteristic information represents a rank selected among multiple ranks according to a result of measurement of the characteristic of the piezoelectric element, and
the control module sets the discharge characteristic of the piezoelectric element according to the selected rank.
